# EUROPEAN PATENT APPLICATION

(11) **EP 3 530 530 A1**
(43) Date of publication of application: **28.08.2019**
(21) Application number: 18167253.6
(22) Date of filing: 13.04.2018
(51) Int. Cl.: B60T 17/02

(54) **A BRAKE SYSTEM WITH A CONTROL UNIT**

(30) Priority: 26.02.2018 TR 201802709
(71) Applicant: Filkar Otomotiv sanayi ve Ticaret Anonim Sirketi, 42250 Konya (TR)
(72) Inventor: FIL, Hakki, 42250 Konya (TR)
(74) Representative: Sevinç, Erkan

(57) **Abstract**

The present invention relates to a brake system for vehicles comprising a distribution terminal (3) distributing the electrical current received from a battery (1), an alternator (5) for producing alternating current and connected with this distribution terminal (3), a ventilation valve (9) used for the evacuation of the air in the system, at least one handbrake element (13), a secondary brake element (14), and a trailer brake control valve (16). Said brake system advantageously comprises a control unit (4) connected to the alternator (5) and arranged to be activated according to the data from the alternator (5) and arranged to delay or stop the activation of connected parts to the brake system by measuring the frequency values from the alternator (5). Said control unit (4) is especially arranged to monitor the system pressure according to the pressure value in the ventilation valve (9) and arranged to activate or deactive at least one compressor (6, 20, 21) by supplying energy or cutting the energy when the system pressure reaches a predetermined value.

## Description

### Technical Field of the Invention

The present invention relates to a brake system especially used in tractors, forestry vehicles, commercial vehicles and construction vehicles wherein the operation of the compressor is controlled automatically, the compressor is deactivated or interrupted after the air required is produced.

### State of the Art

The function of the compressors used in tractors and similar agricultural vehicles is to provide the pressurized air required in the working conditions of the vehicles. The compressors used in the present applications can be mechanic or magnetic coupling pulley type. These compressors are mounted in the motors of tractors and similar agricultural vehicles by means of belt-pulley system and drive required for its operation is provided by the movement from the motor.

Control mechanism is not present in the compressors where mechanic coupling type coupling pulleys are used and compressor keeps working as long as the motor works. This results in decrease in the motor efficiency and motor lifetime because of the extra burden imposed on the motor, as well as increase in the fuel amount used. Thus, extra costs arise for the consumer. In the compressors where magnetic coupling type coupling pulleys are used, the operation of the compressor is partially controlled and the compressor may be deactivated by using on/off button if desired. However, desired efficiency and fuel saving is not able to be provided in these systems because automatic control conception is not present in this system and switching of the compressor is in the control of the consumer.

As well as using control cards in the brake systems in the state of the art, there are disadvantages such as brake function absence, full load energization of the receiver it feeds, lack of capability to provide electromagnetic coherence necessities, being affected by the voltage changes and lack of capability to prevent the formation of reverse electromagnetic force, these disadvantages limit the control card use.

Consequently, presence of the problems above and inadequacy of the present solutions necessitate doing a development in the relevant technical field.

### Objectives of the Invention

The main objective of the present invention is to provide a brake system where the operation of the compressor is controlled automatically.

Another objective of the present invention is to obtain a brake system whose pressure resistance is increased so as to work also in higher voltages.

Another objective of the present invention is to obtain a system protecting itself against alternating current coupling and thus against voltage increases in the low speed.

Another objective of the present invention is to obtain a system protecting itself against sudden and different voltage drops.

Another objective of the present invention is to obtain a system protecting itself against cross-connections of the energy poles with electromagnetic coherence.

Another objective of the present invention is to obtain a brake system capable of working in 12-24-48-96 V direct current voltages on the vehicles.

Another objective of the present invention is to obtain a system where the control of the output voltage is provided at the required proportion after a particular time after the energy is supplied and PWM control or on/off control of the compressor control unit is performed in the electrical compressors and magnetic compressors according to the needs.

Another objective of the present invention is to obtain a brake system enabling the other receivers (vehicle air-conditioning, vehicle cooling fan, external pump) to wait by giving the working priority to the compressor.

### Summary of the Invention

The present invention relates to a brake system for vehicles comprising a distribution terminal distributing the electrical current received from a battery, an alternator for producing alternating current and connected with this distribution terminal, a ventilation valv used for the evacuation of the air in the system, at least one handbrake element, a secondary brake element, and a trailer brake control valve. Said brake system advantageously comprises a control unit connected to the alternator and arranged to be activated according to the data from the alternator and arranged to delay or stop the activation of connected parts to the brake system by measuring the frequency values from the alternator. Said control unit is especially arranged to monitor the system pressure according to the pressure value in the ventilation valve and arranged to activate or deactive at least one compressor by supplying energy or cutting the energy when the system pressure reaches a predetermined value. Thus, a reliable brake system is obtained where the operation of the compressor in the brake system is controlled automatically.

In a preferred embodiment of the invention, the brake system may comprise a ventilation element and/or a pressure transmitter connected to said ventilation valve and arranged to measure the pressure here. Thus, signalling is provided if a low pressure is present.

In a preferred embodiment of the invention, an oil control valve is energized waiting until the system pressure is reduced if it is above the determined value and deactivating the present external receivers when the pressure value defined in the system is reached.

In a preferred embodiment of the invention, an oil flow control element is comprised in order to control the oil pressure and if the information that the oil pressure reached the pressure value determined in the system is not sent by this oil flow control element, failure report is transmitted to a central network system in the vehicle by switching to the failure mode.

In a preferred embodiment of the invention, output voltage is reduced to a determined voltage if the pulse modulation is maintained after the determined "t" duration after the energy is supplied to said oil flow control valve and energy is supplied to the compressor by said control unit.

In a preferred embodiment of the invention, when the information that the oil pressure is reduced comes from the oil flow control element to electronic control unit, the system is closed and information is sent to in-vehicle central network system.

A preferred embodiment of the invention comprises an electronic control unit supplying energy to a service brake control valve by processing the signal from the service brake element when stepped on the service brake, to said trailer brake control valve by processing the signal from a handbrake element when a present handbrake is down and to the secondary brake control valve when a signal comes from the secondary brake element.

In a preferred embodiment of the invention, an external lubricated compressor is energized with on/off control or a pulse width modulation; oil pressure is controlled by means of an oil control element after a "t" duration defined in the system after said compressor is energized; information is sent to the central network system by switching to the failure mode if the information that said oil pressure reached the set pressure value; and the energy of said compressor is cut.

In a preferred embodiment of the invention, when the information that the oil pressure is reduced comes from the oil flow control element to the electronic control unit, the system is closed and in-vehicle central network system is informed.

In a preferred embodiment of the invention, said compressor is fed by an electric motor and/or hydraulic motor.

In a preferred embodiment of the invention, system pressure is waited until it is reduced under the defined pressure if it is above the value defined in the system, by reading the main system pressure via ventilation element and/or pressure transmitter as soon as the information that motor has worked comes to the electronic control unit, and energy is supplied to the electrical motor-fed compressor or hydraulic motor-fed compressor.

In a preferred embodiment of the invention, information is sent to the electronic control unit by the ventilation element and/or pressure transmitter when the pressure value defined in the system is reached.

A preferred embodiment of the invention comprises an electronic control unit supplying energy to the service brake control valve by processing the signal from the service brake element when stepped on the service brake, to the trailer brake control valve by processing the signal from the handbrake element when the handbrake is down, if the answer is "NO" or cutting the energy if the answer is "NC", and supplying energy to a secondary brake control valve when a signal comes from the secondary brake element. In this way, service brake system, secondary brake system and handbrake system are enabled to be controlled.

### Brief Description of the Drawings

Figures whose brief descriptions are presented only aim to ensure the present invention to be better understood, and it does not aim to define the intended covering scope or the context of this covering scope in a way to be understood without considering the detailed description of the invention.
Figure 1 is a schematic view illustrating the working algorithm of the brake system presented according to the present invention, driven by a magnetic-coupling motor and working with a motor-lubricated compressor.
Figure 2 is a schematic view illustrating the working algorithm of the brake system presented according to the present invention, working with an external lubricated compressor being magnetic-coupling and motor-driven.
Figure 3 is a schematic view illustrating the working algorithm of the brake system presented according to the present invention, working with an electrical motor-fed and hydraulic motor-fed compressor.
Figure 4a and 4b is a flow chart illustrating the operation of the brake system working with a magnetic-coupling motor-driven and motor-lubricated compressor described in the figure 1.
Figure 5a and 5b is a flow chart illustrating the operation of the brake system working with a magnetic-coupling, motor-driven and external-lubricated compressor described in the figure 2.
Figure 6a and 6b is a flow chart illustrating the operation of the brake system working with an electric motor and hydraulic motor-fed compressor described in the figure 3.
Figure 7 is a flow chart illustrating the working algorithm of the service brake system in the brake system presented according to the present invention.
Figure 8 is a flow chart illustrating the working algorithm of the secondary brake in the brake system presented according to the present invention.
Figure 9 is a flow chart illustrating the working algorithm of the trailer brake valve in the brake system presented according to the present invention.

### Detailed Description of the Invention

Present invention is described in detail below based on the figures mentioned above. Numbers of the parts used in the figures are as follows:
- 1.: Battery
- 2.: Ignition switch
- 3.: Distribution terminal
- 4.: Control unit
- 5.: Alternator
- 6.: Compressor
- 7.: Oil control valve
- 8.: Oil flow control element
- 9.: Ventilation valve
- 10.: Ventilation element
- 11.: Display panel
- 12.: Pressure transmitter
- 13.: Hand brake element
- 14.: Second hand brake member
- 15.: Service brake element
- 16.: Trailer brake control valve
- 17.: Secondary brake control valve
- 18.: Service brake control valve
- 19.: External receiver
- 20.: Electric driven compressor
- 21.: Hydromotor driven compressor

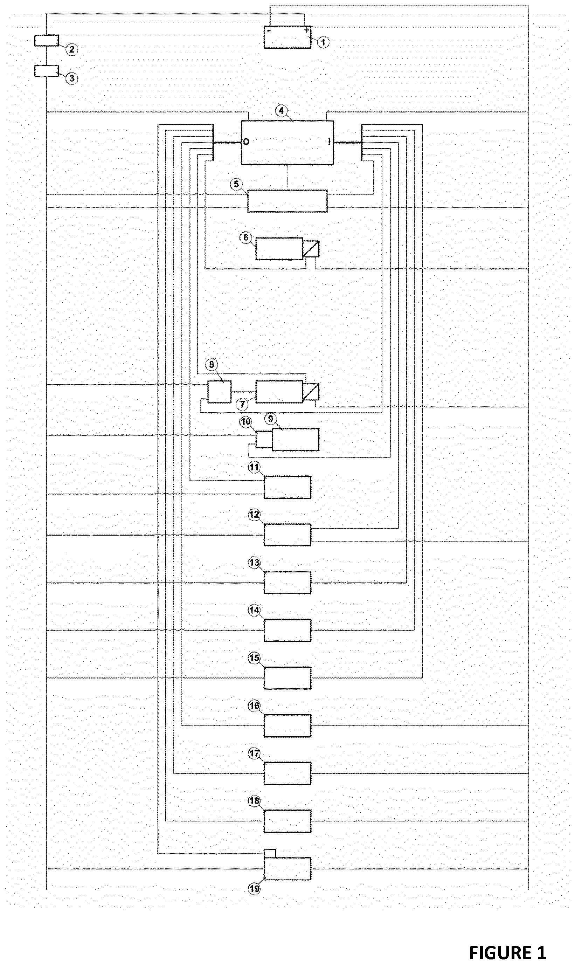

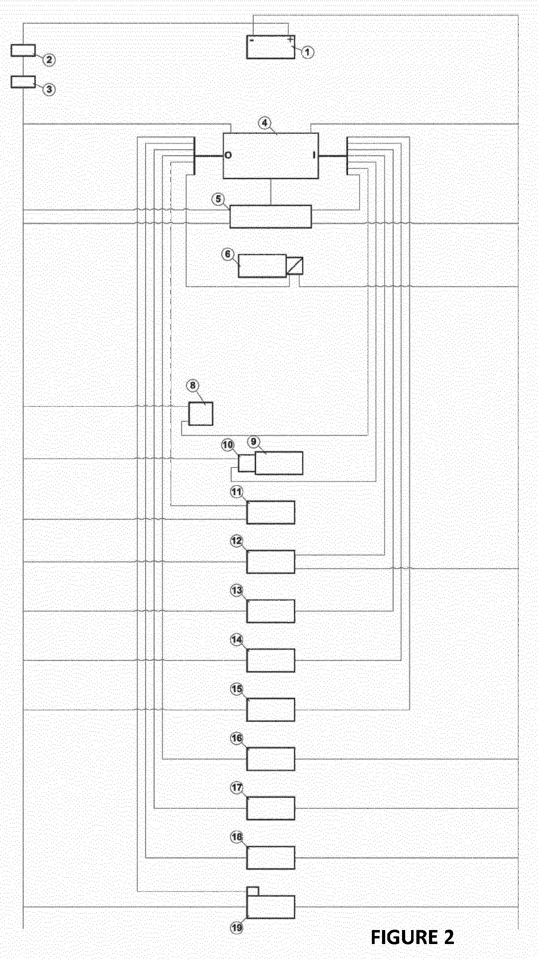

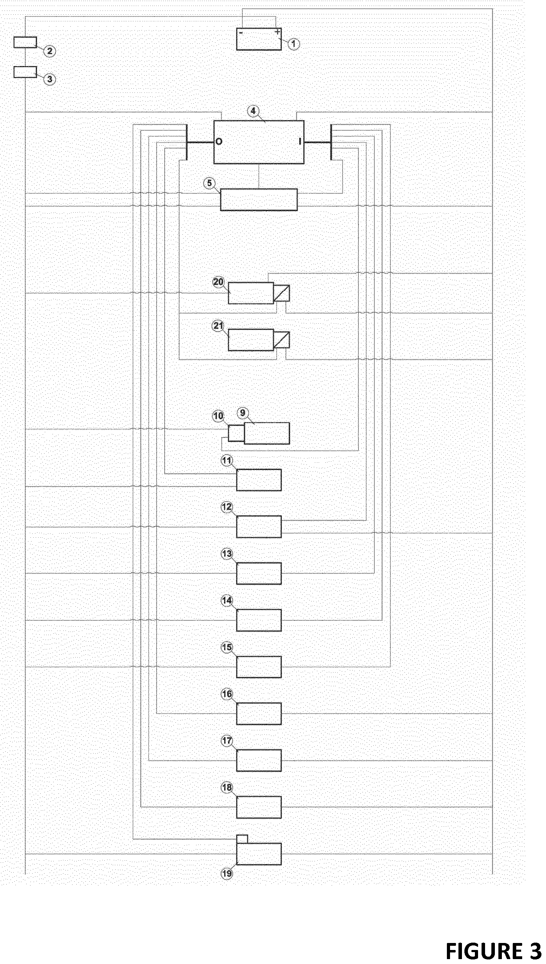

In Figure 1, a brake system electronic control unit (4) working with magnetic-coupling motor driven and motor-lubricated compressor, in Figure 2, a brake system electronic control unit (4) working with magnetic-coupling motor-driven and external-lubricated compressor, in Figure 3, a brake system electronic control unit working with electric motor and hydromotor (hydraulic motor) driven compressor is described.

The present generally relates to a brake system for vehicles comprising a distribution terminal (3) distributing the electrical current received from a battery (1), an alternator (5) for producing alternating current and connected with this distribution terminal (3), a ventilation valve (9) used for the evacuation of the air in the system, at least one handbrake element (13), a secondary brake element (14), and a trailer brake control valve (16). Said brake system advantageously comprises a control unit (4) connected to the alternator (5) and arranged to be activated according to the data from the alternator (5) and arranged to delay or stop the activation of connected parts to the brake system by measuring the frequency values from the alternator (5). Said control unit (4) is especially arranged to monitor the system pressure according to the pressure value in the ventilation valve (9) and arranged to activate or deactive at least one compressor (6, 20, 21) by supplying energy or cutting the energy when the system pressure reaches a predetermined value.

In the system providing the schematic drawing thereof in figure 1, working algorithm of the electronic control unit in a brake system working with magnetic-coupling motor-driven and motor-lubricated compressor is presented. Referring to the Figure 1, when the ignition switch (2) is in the off position, the electric current is transmitted from the battery (1) to electronic control unit (4), alternator (5), oil flow control element (8), ventilation element (10), front display panel (11), pressure transmitter (12), handbrake element (13), secondary brake element (14), service brake element (15) and external receivers (19) by means of distribution terminal (3).

Once the ignition switch (2) is in the off position, electronic control unit (4) is energized and once the information that motor is working come from the alternator (5), electronic control unit (4) starts working. If the information that motor is working does not come, electronic control unit (4) is not activated. Once the information that motor is working come, main pressure of the system is read by ventilation element (10) and/or pressure transmitter (12). If the system pressure is in the cutting set value or above the cutting set value, system pressure is waited until it is reduced under reactivation set value. When the system pressure reaches the reactivation set value, electronic control unit (4) optionally deactivates the external receivers (19) by sending signal to the external receivers (19) in the system. Then, oil flow control valve (7) is supplied with energy by means of pulse width modulation (PWM) or on/off control. Oil pressure is controlled after a time defined in the system by means of oil flow control element (8). If the information that oil pressure reached the pressure value defined in the system does not come, central network system, for example CAN-BUS is informed by switching to the failure mode. After a "t" duration after the oil control valve (7) is supplied with energy, if the pulse modulation is continued, output voltage is reduced to the defined voltage. Then, the compressor (6) is supplied with energy by the electronic control unit (4) by using pulse width modulation (PWM) or by means of on/off control. If the pulse width modulation (PWM) is used after a time set following the compressor (6) reactivation by the electronic control unit (4), the output voltage is reduced to the voltage value defined in the system.

When the information that the oil pressure is reduced comes from the oil flow control element (8) to the electronic control unit (4), system is closed and switched to the failure mode by informing in-vehicle central network system, for example CAN-BUS. Energized compressor system produces pressurized air until the air pressure reaches the defined value again. When the system pressure reach the cutting set value, electronic control unit (4) is informed by the ventilation element (10) and/or pressure transmitter (12). When the information comes, electronic control unit (4) cuts the energy supplied to the oil control valve (7) and then cuts the energy supplied to the compressor (6). When the service brake is stepped on, it supplies service brake control valve (18) with energy by processing the signal from the service brake element (15). When the handbrake is down, trailer brake control valve (16) is supplied with energy by processing the signal from the handbrake element (13), if the answer is "NO" or "NC", energy is cut. When the signal comes from the secondary brake element (14), electronic control unit (4) supplies secondary brake control valve (17) with energy.

In figure 2 describing another embodiment of the invention, electronic control unit (4) and working algorithm of the brake system working with a magnetic-coupling motor-driven and external-lubricated compressor is described.

As seen in Figure 2, when the ignition switch (2) is in the off position, the electric current is transmitted from the battery (1) to electronic control unit (4), alternator (5), oil flow control element (8), ventilation element (10), front display panel (11), pressure transmitter (12), handbrake element (13), secondary brake element (14), service brake element (15) and external receivers (19) by means of distribution terminal (3). Once the ignition switch is in the off position, electronic control card (4) is energized and once the information that motor is working come from the alternator (5), electronic control unit (4) starts working. If the information that motor is working does not come, electronic control unit (4) is not activated. When data that motor is started is received, main pressure of the system is read by the ventilation element (10) and/or pressure transmitter (12). If the system pressure is in the cutting set value or above the cutting set value, the system pressure is waited until it is reduced under reactivation set value. When the system pressure reaches the reactivation set value, electronic control unit (4) optionally deactivates the external receivers (19) by sending signal to the external receivers (19) in the system. Then, the compressor (6) is supplied with energy by the electronic control unit (4) by using pulse width modulation (PWM) or by means of on/off control. Oil pressure is controlled by means of oil flow control element (8) after a "t" time following the energization of the compressor (6). If the information that the oil pressure reached the set pressure value does not come, in-vehicle communication network, for example CAN-BUS is informed and the energy of the compressor (6) is cut by switching to the failure mode.

If the pulse modulation is continued after a particular duration following the compressor (6) activation by the electronic control unit (4), the output voltage is reduced to the system set value voltage. When the information that the oil pressure is reduced comes from the oil flow control element (8) to the electronic control unit (4), system is closed and switched to the failure mode by informing in-vehicle network system, CAN-BUS. Energized compressor system produces pressurized air until the air pressure reach the set value again. When the system pressure reach the cutting set value, electronic control unit (4) is informed by the ventilation element (10) and/or pressure transmitter (12). When the information comes, electronic control unit (4) cuts the energy supplied to the compressor (6). When the service brake is stepped on, it supplies service brake control valve (18) with energy by processing the signal from the service brake element (15). When the handbrake is down, trailer brake control valve (16) is supplied with energy by processing the signal from the handbrake element (13), if the answer is "NO" or if the answer is "NC", energy is cut. When the signal comes from the secondary brake element (14), electronic control unit (4) supplies secondary brake control valve (17) with energy.

In figure 3 describing another embodiment of the invention, electronic control unit (4) and working algorithm of the brake system working with an electronic motor and hydromotor driven compressor is shown.

As seen in Figure 3, when the ignition switch (2) is in the off position, the electric current from the battery (1) is transmitted to electronic control unit (4), alternator (5), ventilation element (10), front display panel (11), pressure transmitter (12), handbrake element (13), secondary brake element (14), service brake element (15) and external receivers (19) by means of distribution terminal (3). Once the ignition switch is in the off position, electronic control card (4) is energized and once the information that motor is working come from the alternator (5), electronic control unit (4) starts working. If the information that motor is working does not come, electronic control unit (4) is not activated. Once the information that motor is working come, main pressure of the system is read by ventilation element (10) and/or pressure transmitter (12). If the system pressure is in the cutting set value or above the cutting set value, system pressure is waited until it is reduced under reactivation set value. When the system pressure reaches the reactivation set value, electronic control unit (4) optionally deactivates the external receivers (19) by sending signal to the external receivers (19) in the system. Then, the electric motor compressor (20) or hydraulic compressor (21) is supplied with energy by the electronic control unit (4) by using pulse width modulation (PWM) or by means of on/off control.

If the pulse width modulation (PWM) is used after a duration set following the electric motor compressor (20) activation by the electronic control unit (4), the output voltage is reduced to the set value voltage. Energized compressor (6) produces pressurized air until the air pressure of the system reach the set value again. When the system pressure reach the cutting set value, electronic control unit (4) is informed by the ventilation element (10) and/or pressure transmitter (12). When the information comes, electronic control unit (4) cuts the energy supplied to the electric motor driven (20) or hydraulic motor driven compressor (21). When the service brake is stepped on, it supplies service brake control valve (18) with energy by processing the signal from the service brake element (15). When the handbrake is down, trailer brake control valve (16) is supplied with energy by processing the signal from the handbrake element (13), if the answer is "NO" or if the answer is "NC", energy is cut. When the signal comes from the secondary brake element (14), electronic control unit (4) supplies secondary brake control valve (17) with energy.

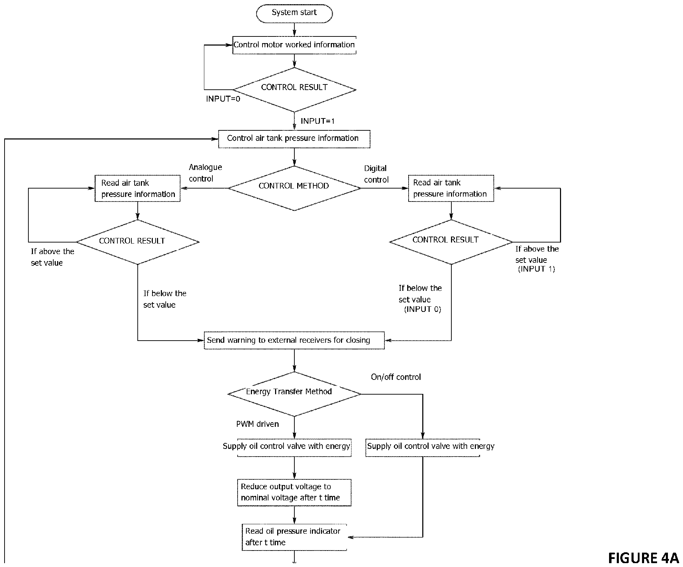

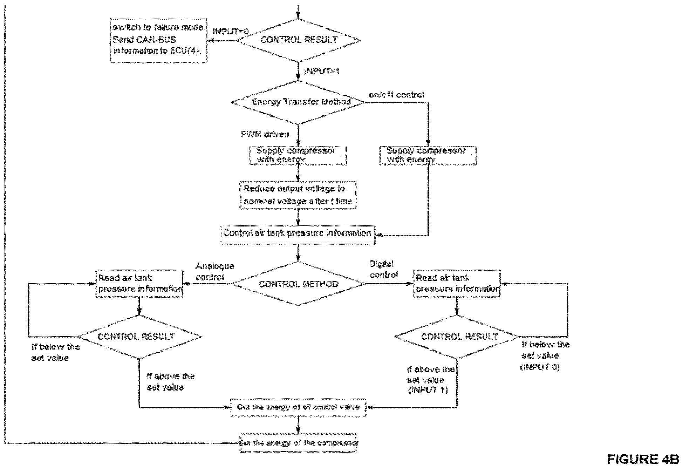

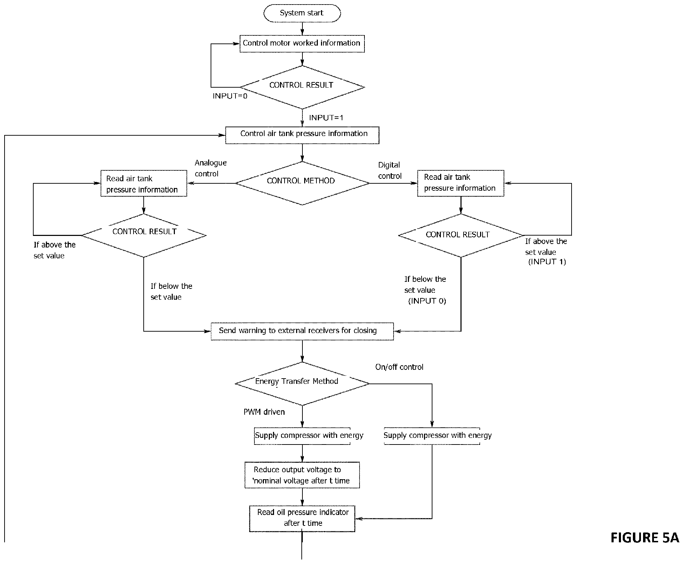

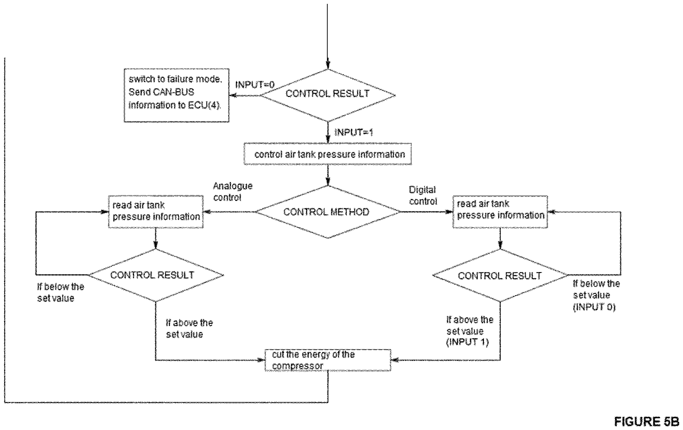

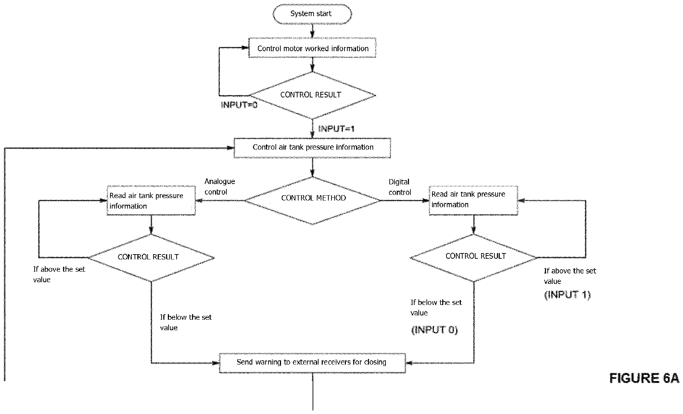

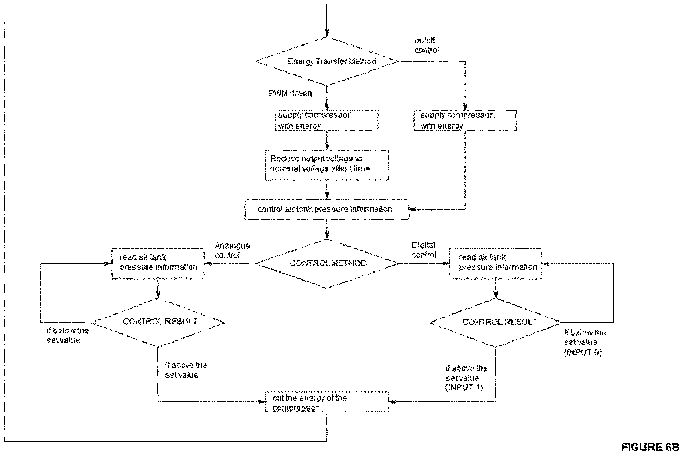

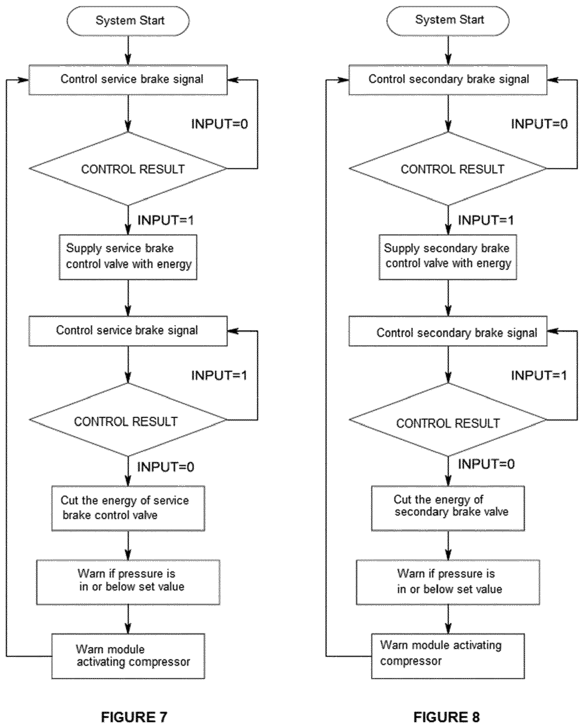

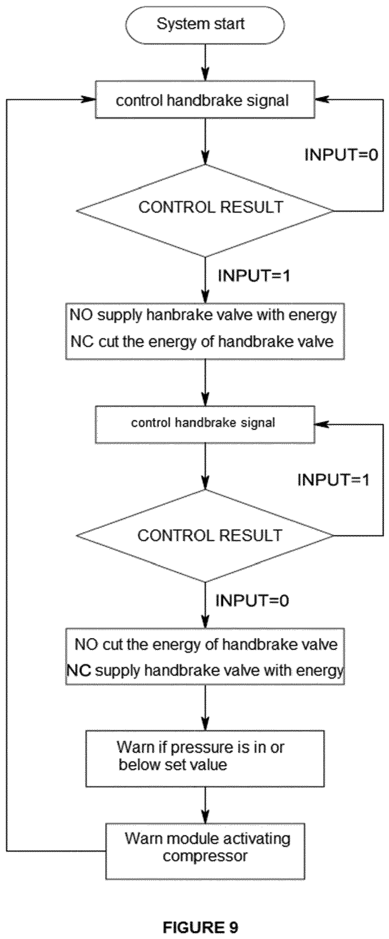

In figure 4a and 4b, a flow chart of a motor-lubricated compressor system described in figure 1 is shown. In figure 5a and 5b, a flow chart of an external-lubricated compressor system described in figure 2 is shown. In figure 6a and 6b, a flow chart of an electric motor and hydromotor driven compressor system described in figure 3 is shown. In figure 7, a flow chart of the service brake is presented. In figure 8, a flow chart showing the working of the secondary brake control is presented. In figure 9, a flow chart of trailer brake control system is presented.

Present invention especially enables the control of the receivers which is normally on and normally off in the brake system. It is also possible to read system pressure in an analogue structure.

## Claims

1. A brake system for a vehicle comprising a distribution terminal (3) distributing the electrical current received from a battery (1);
an alternator (5) for producing alternating current and connected with this distribution terminal (3);
a ventilation valve (9) used for the evacuation of the air in the system;
at least one handbrake element (13);
a secondary brake element (14); and a trailer brake control valve (16) **characterized in that** said brake system further comprises a control unit (4) connected to the alternator (5) and arranged to be activated according to data from the alternator (5) and arranged to delay or stop the activation of connected parts to the brake system by measuring the frequency values from the alternator (5) and **in that** said control unit (4) is arranged to monitor the system pressure according to the pressure value in the ventilation valve (9) and arranged to activate or deactive at least one compressor (6, 20, 21) by supplying energy or cutting the energy when the system pressure reaches a predetermined value.

2. A brake system according to claim 1 **characterized by** a ventilation element (10) and/or a pressure transmitter connected to said ventilation valve (9) and arranged to measure the pressure thereof.

3. A brake system according to claim 1 or 2 wherein the control unit (4) is arranged to suspend until the brake system pressure is reduced if it is above a predetermined value and arranged to energize an oil control valve (7) by deactivating the external receivers (19) when the pressure value defined in the brake system is reached.

4. A brake system according to claim 3 **characterized by** an oil flow control element (8) for controlling the oil pressure and an oil flow control element (8) transmitting the failure information to an in-vehicle central network system by switching to the failure mode if the information that the oil pressure reached the pressure value defined in the brake system does not receive.

5. A brake system according to claim 3 or 4 wherein the control unit (4) is arranged to energize the compressor (6) and to reduce the output voltage to a predetermined voltage if pulse modulation is continued after a "t" time after said oil control valve (7) is supplied with energy.

6. A brake system according to claim 5 wherein the electronic control unit (4) is configured to shut down the system and inform the in-vehicle central network system when the data that oil pressure is reduced come from the oil flow control element (8).

7. A brake system according to any of the preceding claims wherein the control unit (4) is arranged to supply energy to a service brake control valve (18) by processing the signal from the service brake element (15) when stepped on the service brake, to said trailer brake control valve (16) by processing the signal from a handbrake element (13) when a present handbrake is down and to the secondary brake control valve (17) when a signal comes from the secondary brake element (14).

8. A brake system according to claim 1 **characterized by** an on/off control or a pulse width modulation for energizing an external lubricated compressor (6); and comprising the control unit (4) configured to arrange the central network system and cutting the energy of said compressor (6) by switching to the failure mode if the information that the oil pressure is controlled by means of an oil flow control element (8) after a "t" duration defined in the system after said compressor (6) is energized and that said oil pressure reached predetermined pressure value.

9. A brake system according to claim 8 wherein the brake system further comprises an oil flow control element (8) for ensuring that the system is closed and in-vehicle central network system is informed when the information that the oil pressure of the electronic control unit (4) is reduced.

10. A brake system according to claim 1 wherein said compressor (20, 21) is fed by an electric motor and/or hydraulic motor.

11. A brake system according to claim 10 wherein the control unit (4) is arranged to suspend the system pressure until it is reduced under a predetermined pressure value if it is above the predetermined value in the system, by reading the main pressure of the system via ventilation element (10) and/or pressure transmitter (12) as soon as the information that motor has worked comes to the electronic control unit (4), and supplying energy to the electrical motor-fed compressor (20) or hydraulic motor-fed compressor (21).

12. A brake system according to claim 10 or 11 wherein the brake system comprises a ventilation element (10) and/or a pressure transmitter (12) for informing the electronic control unit (4) when the pressure value defined in the system is reached.

13. A brake system according to claim 11 or 12 wherein the control unit (4) is arranged to supply energy to the service brake control valve (18) by processing the signal from the service brake element (15) when stepped on the service brake, to the trailer brake control valve (16) by processing the signal from the handbrake element (13) when the handbrake is down, if the answer is "NO" or cutting the energy if the answer is "NC", and arranged to supply energy to a secondary brake control valve (17) when a signal comes from the secondary brake element (14).
